# EUROPEAN PATENT APPLICATION

(11) **EP 0 708 350 A1**
(43) Date of publication of application: **24.04.1996**
(21) Application number: 95202839.7
(22) Date of filing: 19.10.1995
(51) Int. Cl.: G02B 27/22, G02B 27/04, G02B 27/02

(54) **Viewer,in particular a stereo viewer,as well as a flat sheet therefor,in particular made of easily foldable material**

(30) Priority: 19.10.1994 NL 9401736
(71) Applicant: Evers, Pieter Joannes Hendricus, NL-1072 RD Amsterdam (NL)
(72) Inventor: Evers, Pieter Joannes Hendricus, NL-1072 RD Amsterdam (NL)
(74) Representative: de Bruijn, Leendert C.

(57) **Abstract**

Viewer comprising two side wall sections located opposite one another some distance apart and two end wall sections located opposite one another some distance apart, the first end wall section having one or more viewing openings directed towards the end wall section located opposite, and the second end wall section being suitable for containing or supporting an article to be viewed on the side located facing the first end wall section located opposite, or possessing article support elements for this purpose, which side and end wall sections are joined to one another in such a way that they define an open ring structure, and a bridging section which overlaps the opening of the ring structure and is joined to at least the first end wall section, and wherein support elements are provided to give at least the open ring structure a sloping position with respect to an essentially horizontal support surface, so as to enclose an angle of at least ten degrees, with the first end wall section facing away from said support surface.

## Description

The invention relates to a viewer, the design of which is particularly suitable for production from relatively thin flexible material in sheet form, such as paper, corrugated cardboard or solid cardboard, but also from thin flexible plastic materials. More particularly, the viewer is suitable for production from a single sheet material, from which the viewer can be produced by means of folding operations, optionally supplemented by fastening one or more parts. However, the invention is not restricted to a viewer which can be produced from a single flat sheet. The viewer according to the present invention is, in particular, intended for viewing images, more particularly for viewing images with which a three-dimensional impression can be obtained. For this purpose, the viewer must have two lenses (one for each eye of the person viewing) and aids to keep said lenses reliably at a predetermined distance away from the object to be viewed, such as photographs. Furthermore, the ergonomics are improved with the present invention, the viewer being suitable for placing on a support surface, for example a table top, it being possible to adjust both the lenses and the object to be viewed at an angle with respect to the horizontal, so that the user is able to use the viewer when seated at the table in a comfortable position. In this context, the viewer is designed in such a way that the object to be viewed can be placed in the viewer itself, by which means accurate orientation of the lenses and the object to be viewed with respect to one another can be obtained.

A foldable stereo viewer is disclosed in US Patent 5 309 281. Said known stereo viewer is intended to be held in the hand for use. The disadvantage here is that the correct position of the lenses with respect to the object to be viewed is inadequately ensured. Said viewer is therefore unsuitable for production from thin, sheet-like material.

A further aim, in particular in relation to so-called stereo viewers to achieve a three-dimensional impression of the object to be viewed, is as uniform as possible lighting of the object to be viewed. To this end, use is made of a framework which defines an open ring structure, within which light is able to fall unimpeded on the object to be viewed and the lenses.

A further aim is for a stable support of said ring structure in the sloping position with respect to the supporting surface, making use of relatively simple elements which are suitable for integration in the various parts of the viewer, so that the viewer can, if desired, be produced from a single flat sheet.

Especially when producing the viewer from a single flat sheet, it is possible to obtain the advantage that the viewer can be folded up into a particularly thin pack, as a result of which despatch by post is particularly easy. Furthermore, in specific alternative embodiments of the invention, setting up the viewer from the folded pack is a particularly easy operation, so that no particular specialist knowledge is required on the part of the user. In the light of the fact that the viewer is particularly easy to use and that it is possible to fold this up into a small pack, the field of application of the viewer according to the present invention appears to be correspondingly wide, both amongst those with a special interest and also, for example, for commercial purposes, possibly in connection with direct mailing.

Thus, by means of the present invention, a viewer can be produced in a particularly effective manner at relatively low cost, which viewer, when produced from paper or cardboard, also produces only little environmental pollution when it is thrown away. In addition, in the case of construction from paper or cardboard, the weight can also be said to be correspondingly low, which is also an advantage. The consumption of material is also favourable.

The invention is explained in more detail below with the aid of a non-limiting illustrative embodiment with reference to the appended drawings. In the drawings:
Figure 1 shows a perspective view of an embodiment of the viewer according to the present invention from one direction;
Figure 2 shows a perspective view of the viewer shown in Figure 1, from a different viewing direction;
Figure 3 shows a cross-sectional side view of the viewer shown in Figures 1 and 2;
Figure 4a shows the detail A from Figure 3;
Figure 4b shows an alternative for detail A from Figure 3;
Figure 5 shows, diagrammatically, the sequence of operations to be carried out to set up the viewer shown in Figures 1 and 2;
Figure 6 shows a flat sheet for the viewer according to Figures 1 and 2; and
Figures 7 and 8 show perspective views of variants of the viewer shown in Figure 1.

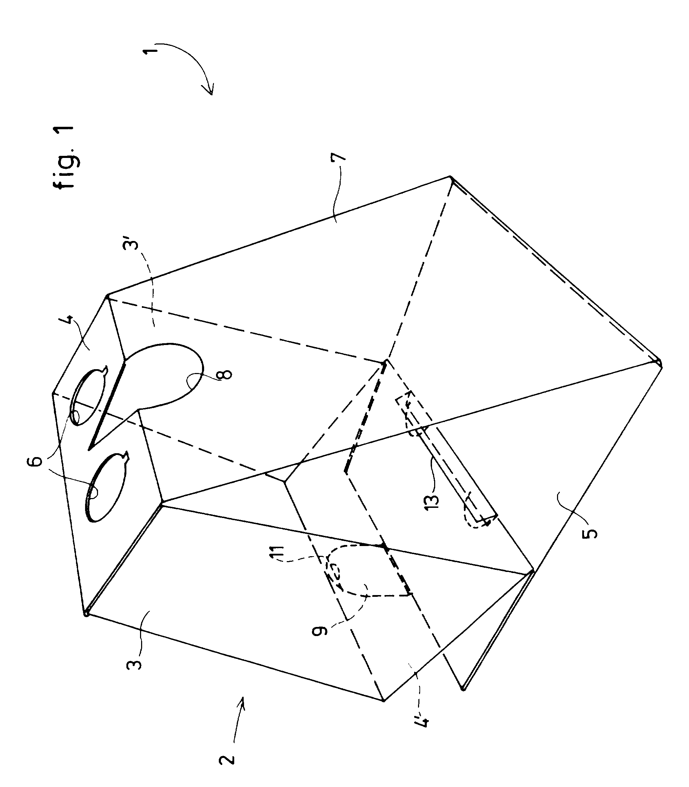

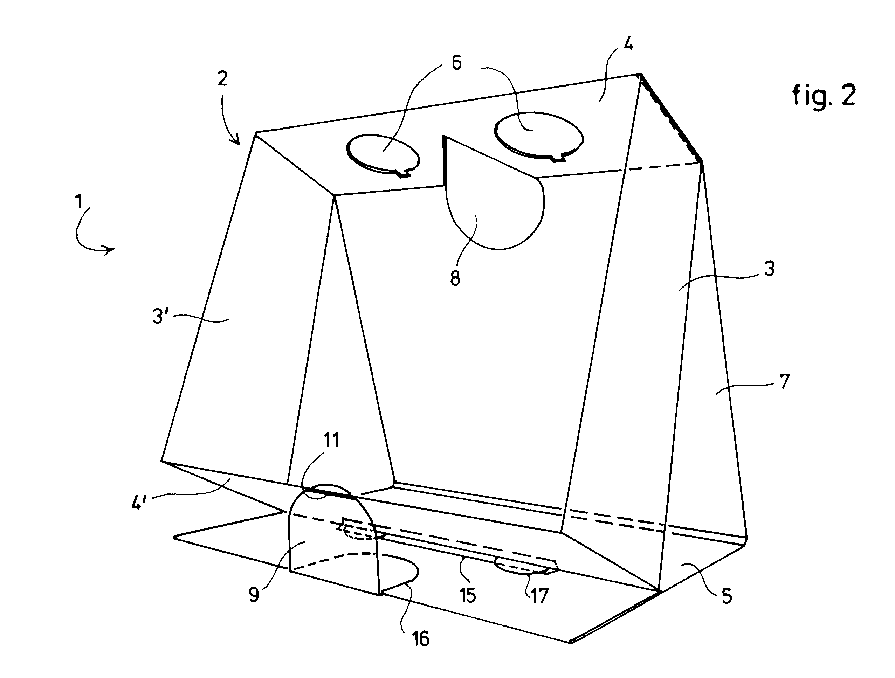

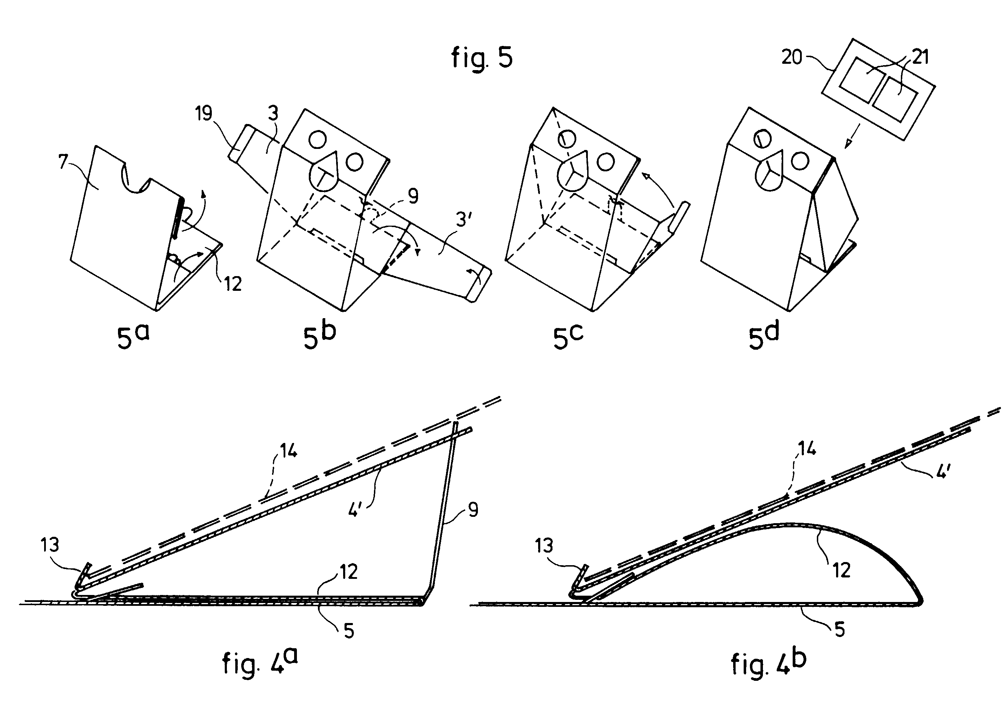

In particular with reference to Figures 1 and 2, a viewer according to the present invention is shown. Said viewer 1 is suitable for placing on an essentially horizontal substrate, for example a table top (not shown). The viewer 1 has a framework 2 which is at a slope with respect to the horizontal and which is formed by two side wall sections 3, 3' which run in the vertical plane and are located opposite one another some distance apart, and two end wall sections 4, 4' which run essentially parallel to one another, are aligned transversely to the side wall sections 3, 3' and are arranged some distance apart. Said framework 2 rests on a base piece 5, which is intended to be placed on the substrate. Consequently, during use, the base piece 5 will likewise be essentially horizontally aligned. The first end wall section 4 remote from the base piece 5 has two viewing openings 6, the gap between which openings is matched to that between the eyes of the average user. Via said openings 6 it is possible to look at the second end wall section 4', on which an object to be viewed can be placed (see Figure 4). One lens can be accommodated in each of the openings 6. Said lenses can, for example, be set to enable each eye to look at a separate image on the second end wall section 4', which images are interpreted by human senses as a single, three-dimensional image.

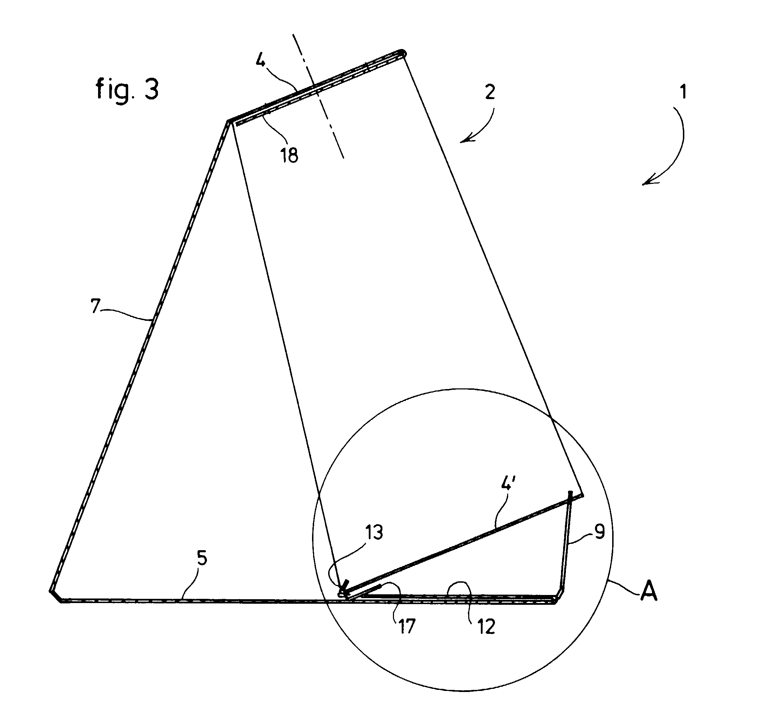

A bridging section 7 is joined to the first end wall section 4, which bridging section bridges the gap between the first end wall section 4 and the base piece 5. As can be seen in Figure 3, said bridging section 7 also assumes a sloping position with respect to the horizontally aligned base surface 5. Said slope is approximately of equal magnitude, but in the opposing direction, to the slope of the ring system 2. An opening 8 is made in the first end wall section 4 and the bridging section 7 in a central position between the openings 6, into which opening 8 the user can insert his or her nose so that the eyes can be brought as close as possible to the openings 6. The bridging section 7 provides the viewer according to the present invention with dimensional stability. In addition, said bridging section 7 provides a light-reflecting surface, as a result of which the incident light on the second wall section 4' is increased.

As can be seen most clearly from Figures 3 and 4, the base piece 5 also runs under the second end wall section 4'. A lip 9 extends virtually vertically upwards from the middle of the base piece 5 below the second end wall section 4' at the outermost front edge. The free top edge of said lip 9 is inserted through a slit 11 in the free front edge of the second end wall section 4' so as to protrude to some extent above the surface of the second end wall section 4'. From the same front edge where the lip 9 engages on the base piece 5, a doubling piece 12 runs in the direction of the bridging section 7 in order to terminate at the rear edge of the second end wall section 4', where said doubling piece 12 is joined to said second end wall section 4'. In the mid region of the second end wall section 4', a stop edge 13 which extends above the surface of the second end wall section 4' is constructed in the vicinity of the rear edge. An object, for example a card 14 (shown notionally in Figure 4a), the entire surface of which overlaps the second end wall section 4', can be pushed so that the bottom edge lies against the stop edge 13 for accurate positioning. In the illustrative embodiment shown, the stop edge 13 is a lip which has been cut out from the doubling piece 12 and folded up around the join line between the doubling piece 12 and the second end wall section 4'. In Figure 2 the shape of said cut-out in the doubling piece 12 for the stop edge 13 is indicated by reference numeral 15. The lip 9 can equally well be obtained by means of a cut-out 16 in the doubling piece 12, which lip 9 is folded upwards around the join line between the base piece 5 and the doubling piece 12 into the position shown. Locking elements or lips 17 which extend upwards from the base piece 5 into the cut-out 15 in the doubling piece 12 fix the doubling piece 12 at the edge thereof facing towards the bridging section 7 as well. By means of the lip 9 and the doubling piece 12, which is joined to the base piece 5 and the second end wall section 4' and is locked by the lips 17, the framework 2 is reliably held in a sloping position with respect to the horizontal.

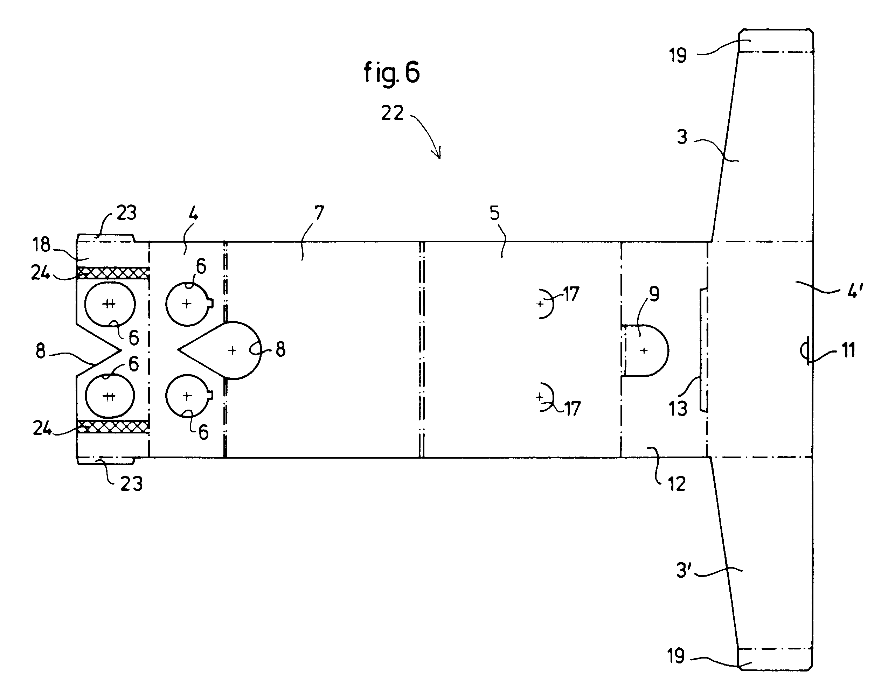

As can be seen more particularly in Figure 3, the first end wall section 4 is covered by an overlapping piece 18, which likewise has openings 6 and 8, respectively. In an advantageous foldable alternative embodiment of the viewer 1 according to the invention, lips 19 (Figures 5 and 6), can be inserted from the respective side wall sections 3, 3' into the gap between said pieces 4 and 18.

In a foldable embodiment of the viewer 1 according to the invention, it is preferable for the side wall sections 3, 3' to be, at least initially, separate from either the first end wall section 4 or the second end wall section 4'. After setting up the viewer 1, said side wall sections 3, 3' can, for example, be permanently joined to said respective end wall sections 4. 4'. However, to enable the viewer 1 to be folded up once more and then set up again, a detachable connection, for example a connection which can be inserted, is to be preferred in this context.

An example of a possible method for unfolding the viewer 1 is shown diagrammatically in Figure 5, for which purpose the sequence from left to right in the drawing is to be followed. Initially the various parts of the viewer 1 are lying with their entire surfaces on top of one another. The lip 9 then extends into the opening 8 and thus holds the viewer 1 in the folded-up position. A start is then made by setting up the bridging section 7 (Figure 5a) which is foldably joined at its respective ends to the base piece 5 and the first end wall section 4. The second end wall section 4', which initially was folded back in the direction of the bridging section 7 on the base piece 5, is brought into a position above the doubling piece 12, whilst the side wall sections 3, 3' are unfolded outwards (Figure 5b). The lips 19 of the side wall sections 3, 3' are then inserted in the gap between the end wall section 4 and the overlapping piece 18 (Figure 5c) and the lip 9 is raised and inserted in the slit 11. The viewer 1 is now ready for use and the object to be viewed, for example a stereo card 20 with two images 21 together forming a stereo pair, can be placed on the second end wall section 4'.

Figure 6 shows a one-piece flat sheet 22 from which the viewer 1 according to Figures 1 and 2 can be formed. The overlapping piece 18 can be fastened by strip-shaped fastening regions 24 to the first end wall section 4. The lips 23 on the overlapping piece 18 can be folded inwards between the overlapping piece 18 and the first end wall section 4 in order to clamp the lips 19 reliably when they are inserted between the lips 23 and the first end wall section 4. Of course, the position of the fold lines between the various parts, which are indicated by dash-and-dot lines, can be set as needed. In a number of situations a double fold line is indicated by two dash-and-dot lines running parallel to one another a small distance apart. However, it is also possible to make a single fold line at said location. A double fold line can also be made in other locations, as required.

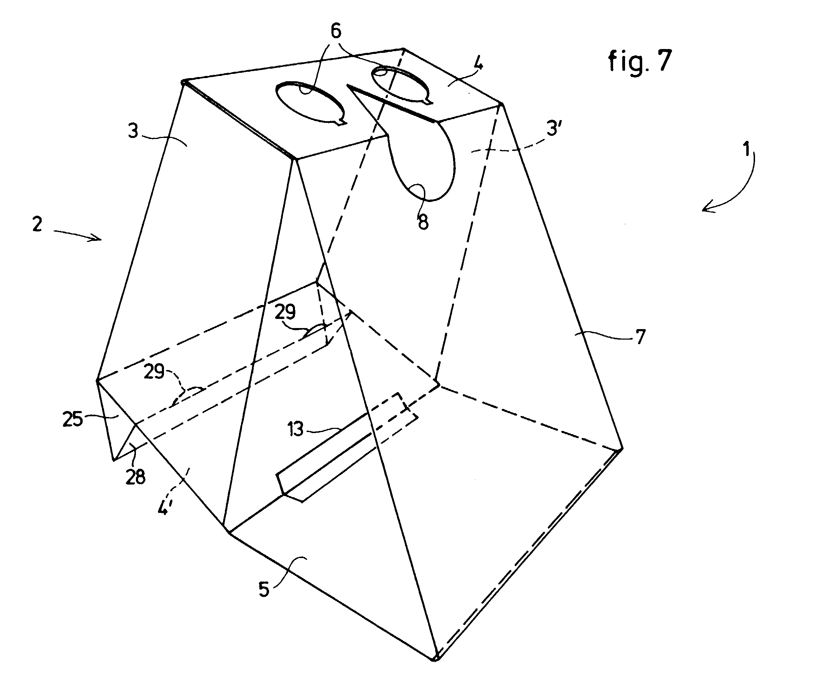

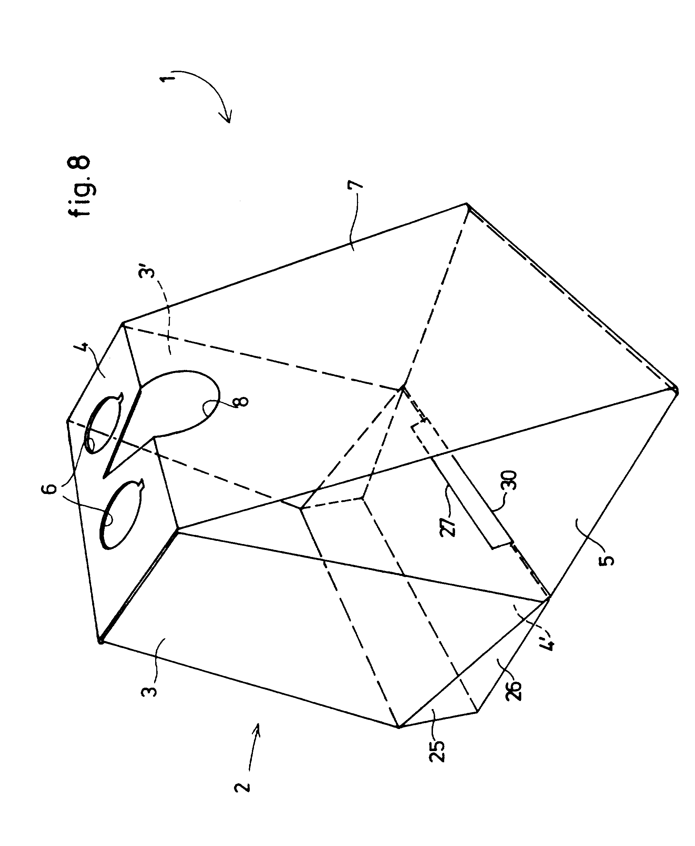

Of course, other alternative embodiments than that shown here also fall under the present invention. For example, the bridging section 7 and/or the side wall sections 3, 3' can be provided with one or more (lighting) holes. In addition, the section of the base piece 5 between the bridging section 7 and the rear edge of the second end wall section 4' can optionally be omitted. Instead of terminating some distance away from the rear edge of the second end wall section 4', the bridging section 7 can also be joined directly to said rear edge, or can be arranged closer to said edge, for example in order to run virtually vertically. It is also possible for the first end wall section 4 to be provided with only one opening 6. The base piece 5 can also be constructed without the doubling piece 12. The end wall section 4' then, for example, forms part of a separate flat sheet, which is fastened to the base piece 5. The lips 17 and/or the stop edge 13 can also be fixed as separate sections to the base piece 5 or the second end wall section 4'. Furthermore, the doubling piece 12 can have a length which is greater than the distance between the front edge of the base piece 5, to which said doubling piece 12 is joined, and the location where the lips 17 are attached to the base piece. The doubling piece 12 will then press, with a compressive prestress, against said lips 17 and bulge to a greater or lesser extent in the direction of the second front wall section 4'. The part of the base piece 5 which is covered by the doubling piece 12 will be stretched in the opposing direction by said compressive prestress in the doubling piece 12 and, as a result, will be reliably pulled flat. Said stretched part of the base piece 5 will form a reliable flat base for resting on a support surface. If the degree of bulging of the doubling piece 12 is sufficient, the second end wall section 4' can come to rest thereon (see Figure 4b), so that the lip 9 can be omitted and the framework 2 can nevertheless be held reliably in the sloping position. Furthermore, it is not necessary that the first end wall section 4 is of double construction with the overlapping piece 18 for insertion of the lips 19 on the side wall sections 3, 3'. For example, said lips 19 can also be joined to said first end wall section 4 by means of an adhesive. Moreover, the viewer 1 can be of such construction that the side wall sections 3, 3' are permanently joined to the first end wall section 4 and, at least initially, are separate from the second end wall section 4'. As is shown in Figs 7 and 8, the second end wall section 4' can be joined directly by the rear edge to the base piece 5, in which case the doubling piece 12 and that part of the base piece 5 located beneath it can be omitted. Possible alternative embodiments for the lip 9 (Figs 1 and 2), in the form of a wall section 25, are given in Figs 7 and 8.

According to Fig. 7, but also in the case of other alternative embodiments, the wall section 25 can be foldably joined close to the front edge of the second end wall section 4', in order to rest with the bottom edge on the support surface.

To provide the wall section 25 with further rigidity, an elongation 28 thereof is fixed by means of circular lips 29 to the wall section 4' such that a V-shaped support is obtained. The wall section 25 can also be constructed as a separate part.

Fig. 8 shows yet a further variant of wall section 25. Here the wall section 25 is extended by a base section 26 which is hooked by means of a lip 27, which has the same function as lip 13, into a cut 30 in the fold line between 4' and 5.

The wall sections 25 and 28 and base section 26 do not necessarily have to be arranged over the entire length of the front edge of the second end wall section 4'.

Incidently, the viewers according to Figs 7 and 8 can also be made from a single flat sheet.

Variants of the flat sheet shown in Figure 6 are also conceivable, in which context consideration must also be given to a 2-part or multi-part flat sheet which is attached to the flat sheet shown in Figure 6. Of course, certain wall sections can be made thicker for strengthening.

The important feature is that a framework 2 is provided which defines an open ring structure, which framework 2 is stabilised by a bridging section 7 which overlaps the open ring structure, whilst elements are present in order to enable the framework 2 to be placed in a sloping position with respect to an essentially horizontal support surface, such as, for example, a table top. It is also advantageous that the viewer 1 according to the present invention is produced from relatively thin, sheet-like, preferably foldable material, such as paper, cardboard, plastic sheeting, and the like, so that the viewer 1 can be folded up to give a particularly thin pack and can be set up in a simple manner. For example, the viewer, with the exception of any lenses, which are to be positioned in the openings 6, can be produced entirely from relatively thin, and therefore inexpensive, cardboard, which grade of cardboard can also be used for the production of the plates 20 with images, so that the flat sheets 22 as well as said plates 14 can advantageously be produced from the same material, by which means cutting losses can be restricted to a minimum.

## Claims

1. Viewer (1) comprising two side wall sections (3, 3') located opposite one another some distance apart and two end wall sections (4, 4') located opposite one another some distance apart, the first end wall section (4) having one or more viewing openings (6) directed towards the end wall section (4') located opposite, and the second end wall section (4') being suitable for containing or supporting an article (14) to be viewed on the side located facing the first end wall section (4) located opposite, or possessing article support elements for this purpose, which side and end wall sections (3, 3'; 4, 4') are joined to one another in such a way that they define an open ring structure (2), and a bridging section (7) which overlaps the opening of the ring structure (2) and is joined to at least the first end wall section (4), and wherein support elements are provided to give at least the open ring structure (2) a sloping position with respect to an essentially horizontal support surface, so as to enclose an angle of at least 10°, with the first end wall section (4) facing away from said support surface.

2. Viewer according to Claim 1, also comprising a base piece (5), by means of which the viewer (1) can be placed on the support structure, and which base piece (5) is joined to that edge of the bridging section (7) and/or the second end wall section (4') which faces away from the first end wall section (4).

3. Viewer according to Claim 1 or 2, wherein a lip (9) directed essentially vertically is joined to the second end wall section (4') and is suitable for supporting on the support surface by that end which faces away from the second end wall section (4').

4. Viewer according to one of the preceding Claims 2 or 3, wherein the base piece (5) at least partially overlaps the second end wall section (4'), and, in said region, an overlapping piece (12) is located between said base piece (5) and said second end wall section (4') so as to be joined by one end to the base piece (5) and to be joined by the opposing end to an end region of the second end wall section (4').

5. Viewer according to Claim 4, wherein the overlapping piece (12) engages, close to the region of the join with the second end wall section (4'), with ridges or lips (17) on the base piece (5).

6. Viewer according to Claim 5, wherein the effective distance between said lips or ridges (17) and the join between the overlapping piece (12) and the base piece (5) is greater than the length of the overlapping piece (12) between the point of join with the base piece (5) and the point of engagement with said lips or ridges (17), so that a compressive prestress prevails in said overlapping piece (12) and the latter is optionally made to bulge in the direction of the second end wall section (4') until it is possibly in contact with the latter.

7. Viewer according to one of the preceding claims, wherein a stop edge (13) extends above the second end wall section (4') on the side facing towards the bridging section (7).

8. Viewer according to Claim 7 and optionally in combination with one of the preceding Claims 4 to 6, wherein the stop edge is taken from the overlapping piece (12) and folded up along the join line between the second end wall section (4') and the overlapping piece (12) and/or is optionally integrated with the second end wall section (4').

9. Viewer according to one of the preceding Claims 5 to 8, wherein the ridges or lips (17) are integrated with the base piece (5) and optionally are defined by areas punched out therefrom.

10. Viewer according to one of the preceding Claims 5 to 9, wherein said lips (17) engage over the overlapping piece (12) and protrude through a slit in the region of the join between the second end wall section (4') and the overlapping piece (12).

11. Viewer according to one of the preceding Claims 3 to 10, wherein the lip (9) is optionally taken from the overlapping piece (12) and joined via a fold line to the base piece (5) and/or the overlapping piece (12).

12. Viewer according to one of the preceding Claims 3 to 11, wherein the free end of the lip (9) can be inserted into a slit or cut-out (11) close to that edge of the second end wall section (4') which faces away from the bridging section (7).

13. Viewer according to one of the preceding claims, wherein the side wall sections (3, 3') are, at least initially, joined to one of the end wall sections (4, 4'), preferably the first end wall section (4), such that they are easily detachable.

14. Viewer according to one of the preceding claims, wherein the first end wall section (4) is at least partially covered by an overlapping section (18), in order to define between them a slit-shaped gap for sideways insertion of a lip (19) on the associated side wall section (3, 3').

15. Flat sheet (22), obviously suitable for production of the viewer according to one of the preceding Claims 1 to 15, comprising an end wall section panel (4, 4') with, adjoining it on either side, foldable side wall section panels (3, 3'), and a further end wall section panel (4', 4) which has, foldably adjoining the latter, a bridging section panel (7) on one of the longitudinal edges, wherein the free ends of the side wall section panels (3, 3') are suitable for joining to said further end wall section panel (4', 4) with the bridging section panel (7).

16. Flat sheet according to Claim 15, having a base piece (5) which is foldably joined to the bridging section piece (7) at the side opposite the end wall section panel (4, 4') directly adjoining the latter.

17. Flat sheet according to Claim 16, wherein the base piece (5) is also joined to the further end wall section panel (4, 4').

18. Flat sheet according to one of the preceding Claims 15 to 17, wherein an overlapping piece (12) is foldably accommodated on the side facing away from the bridging section (7) between the base piece (5) and the further end wall section panel (4, 4').

19. Flat sheet according to one of the preceding Claims 5 to 18, wherein said flat sheet consists of relatively thin, sheet-like, easily foldable material, such as solid cardboard, corrugated cardboard or paper.
